# EUROPÄISCHE PATENTSCHRIFT

(11) **EP 2 822 822 B1**
(45) Veröffentlichungstag und Bekanntmachung des Hinweises auf die Patenterteilung: **05.09.2018**
(21) Anmeldenummer: 13708750.8
(22) Anmeldetag: 28.02.2013
(51) Int. Cl.: B60T 7/04, B60T 7/12, B60T 8/00, B60T 8/17, B60T 8/32, B60T 8/36, B60T 8/40, B60T 8/48, B60T 8/50, B60T 13/12, B60T 13/14, B60T 17/02, B60T 17/22

(54) **VERFAHREN ZUR BESTIMMUNG EINER DRUCK-VOLUMEN-KENNLINIE EINER RADBREMSE**
METHOD FOR DETERMINING A PRESSURE/VOLUME CHARACTERISTIC CURVE OF A WHEEL BRAKE
PROCÉDÉ DE DÉTERMINATION D'UNE COURBE CARACTÉRISTIQUE PRESSION-VOLUME D'UN FREIN SUR ROUE

(30) Priorität: 06.03.2012 DE 102012203495; 27.02.2013 DE 102013203189
(43) Veröffentlichungstag der Anmeldung: 14.01.2015
(73) Patentinhaber: Continental Teves AG & Co. oHG, 60488 Frankfurt (DE)
(72) Erfinder: BILLER, Harald, 65760 Eschborn (DE)
(86) Internationale Anmeldenummer: PCT/EP2013/054058
(87) Internationale Veröffentlichungsnummer: WO 2013/131805

(56) Entgegenhaltungen:
- EP-A1- 1 463 658
- WO-A1-2005/054028
- WO-A1-2005/063539
- WO-A1-2011/029812
- DE-A1- 10 147 181
- DE-A1-102006 057 501
- DE-A1-102011 076 675
- DE-A1-102011 076 952
- DE-A1-102011 077 329
- GB-A- 2 403 520

## Beschreibung

Die Erfindung betrifft ein Verfahren zur Bestimmung einer Druck-Volumen-Kennlinie einer Radbremse in einer Bremsanlage für Kraftfahrzeuge gemäß dem Oberbegriff von Anspruch 1 sowie eine Bremsanlage gemäß dem Oberbegriff von Anspruch 14.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der GB 2 403 520 A ist ein Verfahren zur Erkennung bzw. Bewarnung einer Leckage in einem Bremssystem bekannt, wobei ein Vergleich zwischen dem durch Berechnung bestimmten Druckmittelvolumen, das von einem Hochdruckspeicher abgegeben wurde, und dem Druckmittelvolumen, welches von einer Radbremse aufgenommen wurde, durchgeführt wird. Das Druckmittelvolumen, welches von der Radbremse aufgenommen wurde, wird dabei anhand der bekannten Druck-Volumen-Kennlinie der Radbremse berechnet.

In D2 wird ein Verfahren zur Erkennung von Gasen in einer elektrohydraulischen Bremsanlage beschrieben, welches auf der Messung von Drücken und dem Vergleich von zwei Druckwerten basiert und so ohne eine Bestimmung des von einem Hochdruckspeicher abgegebenen Druckmittelvolumens auskommt. Zur Ermittlung der Menge der im Bremskreis enthaltenen Gase werden die Druckwerte anhand einer Druck-Volumen-Kennlinie in Druckmittelvolumenwerte umgerechnet.

Aus der internationalen Patentanmeldung WO 2010/091883 A1 ist ein Bremssystem mit einem Bremskraftverstärker bekannt, dessen Hauptbremszylinder mechanisch von einem Elektromotor angetrieben wird. Der Hauptbremszylinder ist mit vier Radbremsen hydraulisch verbunden, wobei die Radbremsen mittels jeweils eines Schaltventils von dem Hauptbremszylinder getrennt werden können. Zum Betrieb der Bremsanlage ist die Kenntnis der Druck-Volumen-Kennlinie der einzelnen Radbremsen von Bedeutung. Entsprechend der WO 2010/091883 A1 wird die Druck-Volumen-Kennlinie bei Fahrzeugstillstand für jede Radbremse einzeln aufgenommen, indem das Volumen bei Kenntnis des Hauptbremszylinderdrucks über den entsprechenden Kolbenweg des Hauptbremszylinders erfasst wird. Als nachteilig wird hierbei empfunden, dass dieses Verfahren nur in einem zeitlich begrenzten Umfang, nämlich bei Stillstand des Fahrzeugs, durchgeführt werden kann. Weiterhin wird die Durchführung dieses Verfahrens sowohl bei betätigtem Bremspedal als auch bei unbetätigtem Bremspedal als nachteilig empfunden. Bei betätigtem Bremspedal könnte über ein Rad unter Umständen nicht genügend Bremswirkung erzielt werden, um das Fahrzeug sicher zu halten. Im Falle dass gerade eine Wartung der Bremsanlage durchgeführt wird, könnte bei unbetätigtem Bremspedal das Wartungspersonal durch die Klemmkraft an der Radbremse verletzt werden. Das in der WO 2010/091883 A1 beschriebene Verfahren sollte deshalb nicht im laufenden Betrieb, sondern nur während einer Wartung mit einer gesonderten Auslösung durchgeführt werden.

Es ist Aufgabe der vorliegenden Erfindung, ein Verfahren zur Bestimmung einer Druck-Volumen-Kennlinie einer Radbremse bereitzustellen, welches im Fahrbetrieb des Kraftfahrzeugs durchgeführt werden kann.

Diese Aufgabe wird erfindungsgemäß durch ein Verfahren gemäß Anspruch 1 und eine Bremsanlage gemäß Anspruch 14 gelöst.

Der Erfindung liegt der Gedanke zugrunde, dass während einer oder mehrerer Betriebsbremsungen des Kraftfahrzeugs mehr als eine Radbremse, aber nicht immer alle Radbremsen von der Druckbereitstellungseinrichtung betätigt werden, dass das von der Druckbereitstellungseinrichtung zur Betätigung der Radbremsen abgegebene Druckmittelvolumen bestimmt wird und dass die Druck-Volumen-Kennlinien der einzelnen Radbremsen anhand von derart bestimmter Druckmittelvolumina ermittelt werden.

Die Erfindung bietet den Vorteil, dass die Bestimmung der Druck-Volumen-Kennlinien der einzelnen Radbremsen während normaler Betriebsbremsungen durchgeführt werden kann, da dadurch, dass zumindest zwei Radbremsen von der Druckbereitstellungseinrichtung betätigt werden, das Kraftfahrzeug bei geeigneter Wahl der Radbremsen ausreichend stabil abgebremst werden kann.

Unter einer Druck-Volumen-Kennlinie einer Radbremse wird erfindungsgemäß der Druckmittelbedarf bzw. die Volumenaufnahme der Radbremse in Abhängigkeit vom Bremsdruck, oder anders ausgedrückt der Zusammenhang zwischen dem Bremsdruck (entspricht dem Bremsmoment) und dem Druckmittel- bzw. Volumenbedarf der Radbremse, verstanden. Die Kenntnis dieses Zusammenhangs erlaubt es, ein Soll-Bremsmoment bzw. einen Soll-Bremsdruck in ein Soll-Druckmittelvolumen umzurechnen.

Bevorzugt werden während einer oder mehrerer Betriebsbremsungen verschiedene Gruppen von zwei oder mehr Radbremsen von der Druckbereitstellungseinrichtung betätigt. Die Druck-Volumen-Kennlinien der einzelnen Radbremsen werden dann anhand der von der Druckbereitstellungseinrichtung zur Betätigung der verschiedenen Gruppen von Radbremsen abgegebenen Druckmittelvolumina ermittelt. Zumindest eine der Gruppen von Radbremsen umfasst dabei weniger als alle Radbremsen (Untergruppe). Besonders bevorzugt wird das abgegebene Druckmittelvolumen und der hierdurch erzielte Druck jeweils während des gesamten Bremsvorgangs erfasst und abgespeichert, vorteilhafterweise während des Druckauf- und des Druckabbaus. Es ist generell beabsichtigt, dass der Fahrzeugführer nicht bemerkt, dass nur eine Untergruppe von Radbremsen zur Bremsung betätigt wird, so dass das Verfahren zur Bestimmung der Druck-Volumen-Kennlinien der Radbremsen im Wesentlichen unbemerkt für den Fahrer, während normaler Betriebsbremsungen, durchgeführt werden kann.

Damit das Verfahren für den Fahrzeugführer möglichst unmerklich durchgeführt werden kann, wird der mittels der Druckbereitstellungseinrichtung in der jeweiligen Gruppe von betätigten Radbremsen aufgebaute Druck derart eingestellt, dass die von dem Fahrzeugführer angeforderte (Gesamt)Bremsverzögerung erzielt wird, auch wenn weniger als alle Radbremsen (d.h. eine Untergruppe von Radbremsen) betätigt werden. Neben einer von dem Fahrzeugführer, z.B. über das Bremspedal, angeforderten Bremsverzögerung kann die Bremsverzögerung auch von einer Bremsfunktion angefordert worden sein, z.B. von einer Abstandsregelfunktion.

Aus Sicherheitsgründen und um die Wahrscheinlichkeit einer Irritation des Fahrzeugführers zu vermindern, wird das Verfahren bevorzugt während Betriebsbremsungen bei Fahrzeuggeschwindigkeiten, welche geringer als ein vorgegebener Schwellenwert sind, durchgeführt. Besonders bevorzugt wird das Verfahren ausschließlich bei geringen Fahrzeuggeschwindigkeiten durchgeführt.

Zur Ermittlung eines von der Druckbereitstellungseinrichtung abgegebenen Druckmittelvolumens wird die Druckbereitstellungseinrichtung mit einer Gruppe von zwei oder mehr Radbremsen verbunden, während die Druckbereitstellungseinrichtung von der oder den übrigen Radbremse(n) getrennt ist/sind. Dann wird ein Druckaufbau in der Gruppe von mit der Druckbereitstellungseinrichtung verbundenen Radbremsen mittels der Druckbereitstellungseinrichtung durchgeführt.

Gemäß einer bevorzugten Ausführungsform des erfindungsgemäßen Verfahrens werden die verschiedenen Gruppen von Radbremsen zeitlich nacheinander von der Druckbereitstellungseinrichtung betätigt. Dies kann während einer oder mehreren Betriebsbremsungen geschehen.

Gemäß einer vorteilhaften Weiterbildung der Erfindung werden die Gruppen von Radbremsen bei einer oder mehreren Betriebsbremsungen von der Druckbereitstellungseinrichtung mit unterschiedlichen Drücken beaufschlagt, wobei der jeweilige Druck der Druckbereitstellungseinrichtung gemessen wird. Besonders bevorzugt ist hierfür der Druckbereitstellungseinrichtung ein Drucksensor zugeordnet. Alternativ oder zusätzlich kann in jedem Bremskreis ein Drucksensor angeordnet sein, so dass der Druck der Druckbereitstellungseinrichtung und der mit ihr verbundenen Radbremsen mittels dieser Bremskreis-Drucksensoren bestimmbar ist. Bevorzugt werden die Gruppen von Radbremsen jeweils mit verschiedenen Drücken durch die Druckbereitstellungseinrichtung betätigt und das jeweilige, von der Druckbereitstellungseinrichtung zur Betätigung der Gruppe mit dem Druck abgegebene Druckmittelvolumen bestimmt. Anhand dieser Druckmittelvolumina können dann die Druck-Volumen-Kennlinien der einzelnen Radbremsen bestimmt werden.

Um die Druck-Volumen-Kennlinien aller Radbremsen zu bestimmen, ist die Anzahl von verschiedenen Gruppen von Radbremsen bevorzugt gleich der oder größer als die Anzahl aller Radbremsen. Entsprechend werden bevorzugt für zumindest die Anzahl von verschiedenen Radbrems-Gruppen die von der Druckbereitstellungseinrichtung zur Betätigung der Gruppen abgegebenen Druckmittelvolumina ermittelt.

Für einen Druckwert wird bevorzugt aus den zugehörigen, bestimmten Druckmittelvolumina anhand eines linearen Gleichungssystems die Volumenaufnahme für jede Radbremse ermittelt. Wenn die Anzahl der verschiedenen Gruppen von Radbremsen, deren Gruppenvolumenaufnahme gemessen wurde, größer als die Anzahl der Radbremsen ist, ist dieses Gleichungssystem überbestimmt. Das überbestimmte Gleichungssystem wird vorteilhafterweise näherungsweise nach der Methode der kleinsten Fehlerquadrate gelöst. Dadurch ist das Verfahren robuster gegenüber Messfehlern.

Im Falle, dass eine Gruppe von Radbremsen genau zwei Radbremsen umfasst, ist es bevorzugt, wenn die Gruppe zwei sich diagonal gegenüberliegende Radbremsen oder die beiden vorderen Radbremsen umfasst. Es werden dann bei der Bremsung die beiden diagonal gegenüberliegenden Radbremsen oder die beiden vorderen Radbremsen betätigt, wodurch das Fahrzeug auch bei nur zwei betätigten Radbremsen stabil gebremst werden kann.

Um instabile Bremsungen zu vermeiden, umfasst bevorzugt keine der Gruppen von Radbremsen mehr als eine gebremste Hinterachs-Radbremse und nur eine einzige gebremste Vorderachs-Radbremse.

Ein erfindungsgemäßes Verfahren zur Ermittlung der Druck-Volumen-Kennlinien der Radbremsen, d.h. die entsprechende Betätigung der, insbesondere Gruppen von, Radbremsen durch die Druckbereitstellungseinrichtung wird bevorzugt abgebrochen, sobald eine Bremsdruckregelfunktion angefordert oder notwendig wird. Vorteilhafterweise wird ein erfindungsgemäßes Verfahren sofort abgebrochen, wenn eine Antiblockierregelung oder eine Fahrdynamikregelung eingeleitet bzw. aktiviert wird. Hierdurch wird die Sicherheit und Fahrzeugstabilität bei der Bremsung gewährleistet.

Gemäß einer Weiterbildung des erfindungsgemäßen Verfahrens werden bei einer oder mehreren Bremsungen, besonders bevorzugt bei mehreren vorgegebenen oder vorbestimmten Drücken, verschiedene Gruppen von zwei oder mehr Radbremsen mit der Druckbereitstellungseinrichtung verbunden, währen die übrigen Radbremsen von der Druckbereitstellungseinrichtung getrennt sind, und das von der Druckbereitstellungseinrichtung zur Betätigung der jeweiligen Gruppe von Radbremsen abgegebene Druckmittelvolumen wird bestimmt. Anhand der von der Druckbereitstellungseinrichtung abgegebenen Druckmittelvolumina wird die Volumenaufnahme, besonders bevorzugt in Abhängigkeit vom Druck, für jede einzelne Radbremse ermittelt.

Bevorzugt wird die Druckbereitstellungseinrichtung durch eine Zylinder-Kolben-Anordnung gebildet, deren Kolben durch einen elektromechanischen Aktuator betätigbar ist, wobei das von der Druckbereitstellungseinrichtung abgegebene Druckmittelvolumen mittels einer Wegerfassungseinrichtung oder einer Lagenerfassungseinrichtung bestimmt wird, welche eine eine Position oder Lage des Kolbens charakterisierende Größe erfasst.

Bevorzugt wird das erfindungsgemäße Verfahren in einer Bremsanlage mit zumindest zwei Bremskreisen durchgeführt, bei welcher jeder Bremskreis über eine hydraulische Verbindungsleitung mit einem, vorteilhafterweise stromlos offenen, Trennventil mit einem Hauptbremszylinder und über eine weitere hydraulische Verbindungsleitung mit einem, vorteilhafterweise stromlos geschlossenen, Zuschaltventil mit der Druckbereitstellungseinrichtung verbunden ist.

Die Erfindung betrifft auch eine Bremsanlage mit einer Druckbereitstellungseinrichtung und einer elektronischen Steuer- und Regeleinheit, in welcher ein erfindungsgemäßes Verfahren durchgeführt wird.

Die Bremsanlage umfasst je Radbremse ein elektrisch ansteuerbares Einlassventil, mittels welchem eine Verbindung zwischen der Radbremse und der Druckbereitstellungseinrichtung verbindbar bzw. trennbar ist. Bevorzugt ist die Radbremse im nicht angesteuerten Zustand des Einlassventiles mit der Druckbereitstellungseinrichtung verbunden.

Die Bremsanlage umfasst bevorzugt weiterhin je Radbremse ein elektrisch ansteuerbares Auslassventil, mittels welchem eine Verbindung zwischen der Radbremse und einem Druckmittelvorratsbehälter verbindbar bzw. trennbar ist. Die Auslassventile sind im nicht angesteuerten Zustand vorteilhafterweise gesperrt.

Bevorzugt wird die Druckbereitstellungseinrichtung durch eine Zylinder-Kolben-Anordnung gebildet, deren Kolben durch einen elektromechanischen Aktuator betätigbar ist. So kann das von der Druckbereitstellungseinrichtung abgegebene Druckmittelvolumen einfach mittels einer Wegerfassungseinrichtung oder einer Lagenerfassungseinrichtung, besonders bevorzugt Rotorlagenerfassungseinrichtung, bestimmt werden, welche eine eine Position oder Lage des Kolbens charakterisierende Größe erfasst.

Bevorzugt handelt es sich um eine Bremsanlage für Kraftfahrzeuge, die in einer sog. "Brake-by-wire" -Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Die Bremsanlage umfasst bevorzugt einen Pedalwegsimulator, welcher dem Fahrzeugführer in der "Brake-by-wire"-Betriebsart ein angenehmes Bremspedalgefühl vermittelt. Der Pedalwegsimulator ist besonders bevorzugt hydraulisch ausgeführt und mit dem Hauptbremszylinder verbunden oder verbindbar. Der Pedalwegsimulator ist vorteilhafterweise mittels eines Simulator-Freigabeventils an- und abschaltbar ausgeführt.

Weitere bevorzugte Ausführungsformen der Erfindung ergeben sich aus den Unteransprüchen und der nachfolgenden Beschreibung anhand von Figuren.

Es zeigen schematisch
- Fig. 1: eine beispielsgemäße Bremsanlage zur Durchführung eines erfindungsgemäßen Verfahrens, und
- Fig. 2: ein Blockschaltbild zur Veranschaulichung eines beispielsgemäßen Verfahrens.

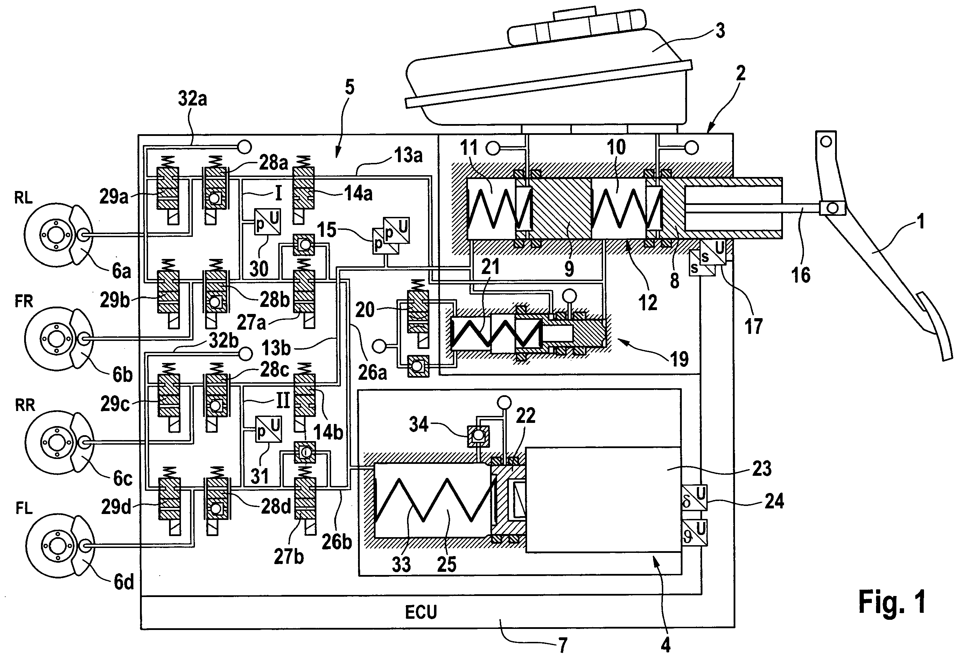

In Fig. 1 ist eine beispielsgemäße Bremsanlage zur Durchführung eines erfindungsgemäßen Verfahrens schematisch dargestellt. Die Bremsanlage umfasst eine Betätigungseinrichtung 2, welche mittels eines Betätigungs- bzw. Bremspedals 1 durch einen Fahrzeugführer betätigbar ist, einen der Betätigungseinrichtung 2 zugeordneten Druckmittelvorratsbehälter 3, eine elektrisch steuerbare Druckbereitstellungseinrichtung 4, eine elektrisch steuerbare Druckmodulationseinrichtung 5, an deren Ausgangsanschlüsse Radbremsen 6a-6d eines nicht dargestellten Kraftfahrzeuges angeschlossen sind, und eine elektronische Steuer- und Regeleinheit 7 (ECU: electronic control unit), die der Verarbeitung von Sensorsignalen und der Ansteuerung der elektrisch steuerbaren Komponenten dient.

Betätigungseinrichtung 2 umfasst einen zweikreisigen Hauptbremszylinder bzw. Tandemhauptzylinder 12 mit zwei in einem (Hauptbremszylinder-)Gehäuse hintereinander angeordneten Kolben 8, 9, welche hydraulische Druckkammern 10, 11 begrenzen. Die Druckkammern 10, 11 stehen über in den Kolben 8, 9 ausgebildete radiale Bohrungen mit dem Druckmittelvorratsbehälter 3 in Verbindung, wobei diese Bohrungen durch eine Relativbewegung der Kolben 8, 9 im Gehäuse absperrbar sind. Außerdem ist jede Druckkammer 10, 11 mittels einer hydraulischen Leitung 13a, 13b mit einem Bremskreisabschnitt I, II mit je zwei Radbremskreisen mit hydraulisch betätigbaren Radbremsen 6a, 6b; 6c, 6d verbunden. In den hydraulischen Leitungen 13a, 13b ist je ein Trennventil 14a, 14b zur Trennung der hydraulischen Verbindung zwischen der Druckkammer 10, 11 des Hauptbremszylinder 12 und den zugehörigen Radbremsen 6a, 6b; 6c, 6d eingefügt, das als ein elektrisch betätigbares, vorzugsweise stromlos offenes, 2/2-Wegeventil ausgebildet ist. Ein an den Druckraum 11 angeschlossener, vorzugsweise redundant ausgeführter, Drucksensor 15 erfasst den im Druckraum 11 durch ein Verschieben des zweiten Kolbens 9 aufgebauten Druck, welcher der vom Fahrer erzeugten Pedalkraft entspricht. Außerdem nehmen die Druckkammern 10, 11 nicht näher bezeichnete Rückstellfedern auf, die die Kolben 8, 9 entgegen der Betätigungsrichtung vorspannen. Eine am Bremspedal 1 angekoppelte Kolbenstange 16 wirkt mit dem ersten (Hauptzylinder-)Kolben 8 zusammen, wobei eine den Betätigungsweg des Bremspedals 1 charakterisierende Größe, z.B. der Betätigungsweg oder -winkel des Bremspedals 1 selbst oder der Betätigungsweg des mit dem Bremspedal gekoppelten Kolbens 8, von einem, vorzugsweise redundant ausgeführten, Wegsensor 17 erfasst wird.

Beispielsgemäß ist die Radbremse 6a dem linken Hinterrad (RL), die Radbremse 6b dem rechten Vorderrad (FR), Radbremse 6c dem rechten Hinterrad (RR) und die Radbremse 6d dem linken Vorderrad (FL) zugeordnet. Andere Bremskreisaufteilungen sind denkbar.

Betätigungseinrichtung 2 umfasst weiter einen Pedalwegsimulator 19, welcher mit dem Hauptbremszylinder 12 zusammenwirkt und dem Fahrzeugführer in einem ersten Betriebsmodus (einer sogenannten "Brake-by-wire"-Betriebsart) ein angenehmes Pedalgefühl vermittelt. Pedalwegsimulator 19 ist beispielsgemäß hydraulisch betätigbar und mit zumindest einer Druckkammer 10, 11 des Hauptbremszylinders 12 verbunden. Pedalwegsimulator 19 ist mittels eines elektrisch betätigbaren Simulatorfreigabeventils 20 zu- und abschaltbar.

Pedalwegsimulator 19 besteht beispielsgemäß im Wesentlichen aus zwei Simulatorkammern, einer Simulatorfederkammer mit Simulatorfeder 21 sowie einem diese Kammern voneinander trennenden Simulatorkolben (Stufenkolben). Dabei sind die Simulatorkammern an jeweils eine Druckkammer 10, 11 des Hauptbremszylinders 12 angeschlossen, während die Simulatorfederkammer unter Zwischenschaltung des Simulatorfreigabeventils 20 mit dem Druckmittelvorratsbehälter 3 verbindbar ist. Simulatorfreigabeventil 20 ist als ein elektrisch betätigbares, vorzugsweise stromlos geschlossenes, 2/2-Wegeventil ausgebildet.

Die elektrohydraulische Druckbereitstellungseinrichtung 4 ist als eine hydraulische Zylinder-Kolben-Anordnung ausgebildet, deren Kolben 22 von einem schematisch angedeuteten Elektromotor 23 unter Zwischenschaltung eines nicht dargestellten Rotations-Translations-Getriebes betätigbar ist. Der Elektromotor 23 sowie das Rotations-Translations-Getriebe bilden einen Linearaktuator, wobei zur Erfassung einer für die Position/Lage des Kolbens 22 der Druckbereitstellungseinrichtung 4 charakteristischen Größe ein Sensor 24 vorhanden ist, welcher beispielsgemäß als ein der Erfassung der Rotorlage des Elektromotors 23 dienender Rotorlagensensor 24 ausgeführt ist. Kolben 22 begrenzt einen Druckraum 25, welcher über hydraulische Leitungen 26a, 26b mit je einem elektrisch betätigbaren Zuschaltventil 27a, 27b mit den Bremskreisabschnitten I, II verbindbar ist. Dabei ist den Zuschaltventilen 27a, 27b je ein zu dem Druckraum 25 hin schließendes Rückschlagventil parallel geschaltet. Außerdem steht Druckraum 25 über ein zum Druckmittelvorratsbehälter 3 schließendes Rückschlagventil 34 mit diesem in Verbindung. Die Zuschaltventile 27a, 27b sind als elektrisch betätigbare, vorzugsweise stromlos geschlossene, 2/2-Wegeventile ausgebildet. In Druckraum 25 ist eine Feder 33 angeordnet, welche den Kolben 22 entgegen der Druckaufbaurichtung belastet.

Mittels des Sensors 24 und der Kenntnis der Übersetzung des Rotations-Translations-Getriebes kann ein von der Druckbereitstellungseinrichtung 4 zur Betätigung der Radbremsen 6a-6d abgegebenes Druckmittelvolumen V_{DQ} bestimmt werden.

Zur Modulation des Druckes an den Radbremsen 6a-6d umfasst die hydraulische Druckmodulationseinrichtung 5 beispielsgemäß je Radbremse 6 ein Einlassventil 28a-28d und ein Auslassventil 29a-29d. Die Eingangsanschlüsse der Einlassventile 28a-28d bzw. die Bremskreisabschnitte I, II können mit dem Druck des Hauptbremszylinders 12 (über die Leitungen 13a, 13b mit den Trennventilen 14a, 14b) oder dem Druck der Druckbereitstellungseinrichtung 4 (über die Leitungen 26a, 26b mit den Zuschaltventilen 27a, 27b) versorgt werden. Die Ausgangsanschlüsse der Auslassventile 29a-29d sind über Rücklaufleitungen 32a, 32b mit dem drucklosen Druckmittelvorratsbehälter 3 verbunden. Ergänzend ist noch zu erwähnen, dass die kreisförmigen Symbole (außerhalb der Radbremsen und der Rückschlagventile) zum Druckmittelvorratsbehälter 3 führende hydraulische Leitungen darstellen. Vorteilhafterweise sind die Einlassventile 28a-28d als elektrisch betätigbare, stromlos offene Druckregelventile und die Auslassventile 29a-29d als elektrisch betätigbare, stromlos geschlossene 2/2-Wegeventile ausgebildet.

Beispielsgemäß ist in jedem Bremskreisabschnitt I, II ein Drucksensor 30, 31 zum Erfassen des an den Eingangsanschlüsse der zugehörigen Einlassventile 28a, 28b; 28c, 28d herrschenden Drucks angeordnet. Alternativ ist es denkbar, dass in nur einem der beiden Bremskreisabschnitte I, II ein Drucksensor angeordnet ist. Alternativ oder zusätzlich kann ein Drucksensor in der Leitung 26a, 26b zwischen Druckraum 25 und Zuschaltventilen 27a, 27b angeordnet sein. Mittels dieses Drucksensors oder dieser Drucksensoren ist es möglich, in einer sogenannten "Brake-by-wire" -Betriebsart den Druck der Druckbereitstellungseinrichtung 4 zu bestimmen.

In der "Brake-by-wire" -Betriebsart werden die Bremskreisabschnitte I, II mit dem Druck der Druckbereitstellungseinrichtung 4 beaufschlagt. Hierzu sind beispielsgemäß die Zuschaltventile 27a, 27b geöffnet, so dass die Druckbereitstellungseinrichtung 4 mit den Bremskreisabschnitten I, II hydraulisch verbunden ist. Hauptbremszylinder 12 ist mittels der geschlossenen Trennventile 14a, 14b von den Bremskreisabschnitten I, II bzw. den Radbremsen 6a-6d getrennt. Simulatorfreigabeventil 20 ist geöffnet, so dass Pedalwegsimulator 19 zu- bzw. angeschaltet ist. Bei einer Betätigung des Bremspedals 1 durch den Fahrzeugführer wird Druckmittelvolumen aus den Druckkammern 10, 11 des Hauptbremszylinders 12 in die Simulatorkammern des Pedalwegsimulators 19 verschoben. Im Falle einer normalen Bremsung, in welcher kein Verfahren zur Bestimmung einer Druck-Volumen-Kennlinie durchgeführt wird, sind die Einlassventile 28a-28d aller Radbremsen 6a-6d geöffnet und die Druckbereitstellungseinrichtung 4 wird mittels der elektronischen Steuer- und Regeleinheit 7 angesteuert, um einen Solldruck p zur Beaufschlagung aller Radbremsen 6a-6d bereitzustellen. Der Wert für den Solldruck p der Druckbereitstellungeinrichtung 4 wird, z.B. in der elektronischen Steuer- und Regeleinheit 7, anhand des, z.B. mittels der Sensoren 15 und 17, bestimmten Fahrerbremswunsches bestimmt. Das von der Druckbereitstellungseinrichtung 4 in die mit ihr durch geöffnete Einlassventile 28a-28d verbundenen Radbremsen 6a-6d abgegebene Druckmittelvolumen V_{DQ} kann anhand der direkt oder indirekt erfassten Position/Lage des Kolbens 22 der Druckbereitstellungseinrichtung 4 (z.B. mittels Rotorlagensensor 24) bestimmt werden.

Für die Steuerung und/oder Regelung der beispielsgemäßen Bremsanlage ist es von Vorteil, wenn für jede Radbremse 6a-6d die Volumenaufnahme in Abhängigkeit vom Druck, die sogenannte Druck-Volumen-Kennlinie Vᵢ(p) der Radbremse i (mit i=6a, 6b, 6c, 6d bzw. i=RL, FR, RR, FL), einzeln bekannt ist.

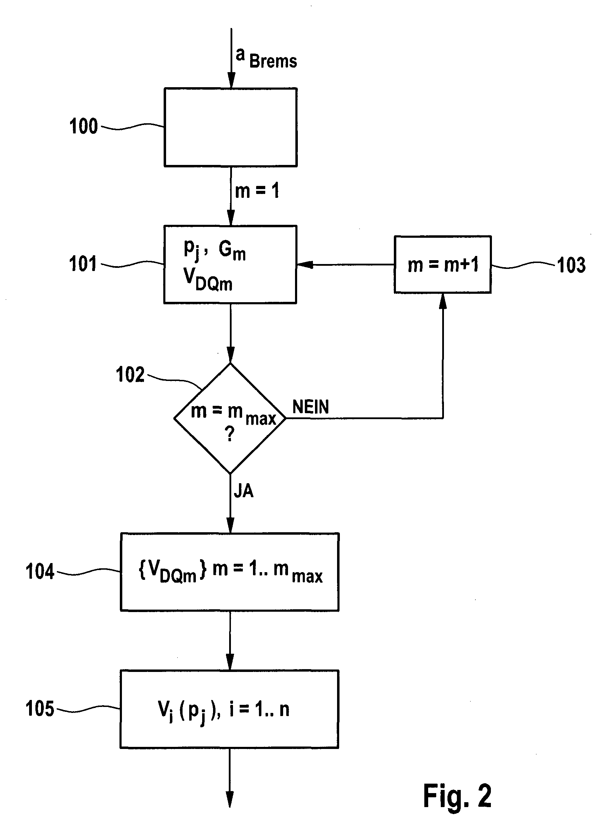

In Fig. 2 ist ein Blockschaltbild zur Veranschaulichung eines beispielsgemäßen Verfahrens zur Bestimmung der Druck-Volumen-Kennlinien Vᵢ(p) der Radbremsen i=1, 2, .., n (z.B. n=4 Radbremsen mit i=RL, FR, RR, FL) schematisch dargestellt. Wird im normalen Betrieb des Kraftfahrzeugs durch den Fahrzeugführer oder eine Bremsfunktion, z.B. eine Abstandsregelfunktion, eine Bremsverzögerung a_{Brems} angefordert, so wird ein entsprechender Druckaufbau, und ggf. folgender Druckabbau, mit Druckwerten pⱼ in bestimmten Gruppen Gₘ, mit m=1 bis mₘₐₓ, von Radbremsen durchgeführt.

Der Druck wird dabei so erhöht, dass die Verzögerung dem Wert entspricht, den der Fahrer oder die anfordernde Funktion erwartet (Block 100). Der jeweilige Wert pⱼ des Druckes der Druckbereitstellungseinrichtung 4 kann, wie im Zusammenhang mit Fig. 1 bereits beschrieben, mit einem Drucksensor gemessen bzw. überwacht werden.

Um in einer Gruppe Gₘ von Radbremsen einen Druckverlauf einzustellen, werden in Block 101 die zu der Gruppe Gₘ gehörenden Radbremsen durch ihre Einlassventile mit der Druckbereitstellungseinrichtung 4 verbunden und die übrigen Radbremsen durch ihre Einlassventile von der Druckbereitstellungseinrichtung 4 getrennt. Dabei wird das von der Druckbereitstellungseinrichtung 4 zur Betätigung der Radbrems-Gruppe Gₘ abgegebene Druckmittelvolumen V_{DQm} je Druckwert pⱼ bestimmt und gespeichert.

Für jede vorgegebene Gruppe Gₘ von Radbremsen, d.h. für m=1, 2, .., mₘₐₓ, wird das von der Druckbereitstellungseinrichtung 4 zur Betätigung der Radbrems-Gruppe Gₘ abgegebene Druckmittelvolumen V_{DQm} je Druckwert pⱼ bestimmt und gespeichert. D.h. in Fig. 2 werden die Blöcke 101, 102, 103 durchlaufen, bis in Block 102 erkannt wird, dass für die letzte Gruppe Gₘ mit m=mₘₐₓ ein Druckmittelvolumen V_{DQm} für einen Druck pⱼ bestimmt wurde (JA in Abfrage 102). In Block 104 liegen dann für den Druck pⱼ die Werte der von der Druckbereitstellungseinrichtung 4 zur Betätigung der Radbrems-Gruppe Gₘ abgegebenen Druckmittelvolumina V_{DQm} für m=1, 2, .., mₘₐₓ vor. In Block 105 werden aus den Druckmittelvolumina V_{DQm} die Radvolumina Vᵢ der Radbremsen i=1, 2, .., n (z.B. n=4 Radbremsen mit i=RL, FR, RR, FL; also Radvolumina V_{FL}, V_{FR}, V_{RL}, V_{RR}) für den entsprechenden Druck p=pⱼ bestimmt.

Um die vollständigen Druck-Volumen-Kennlinien Vᵢ(p) der Radbremsen zu erhalten, wird das beschriebene Vorgehen (Vermessen der Druckmittelvolumina V_{DQm} der Radbrems-Gruppen und Bestimmen der Radvolumina Vᵢ) bei verschiedenen Druckwerten pⱼ, z.B. während verschiedener Betriebsbremsungen, durchgeführt. Liegen die Radvolumina Vᵢ bei ausreichend vielen Druckwerten vor, können die Druck-Volumen-Kennlinien Vᵢ(p), z.B. durch Interpolation oder Methode der kleinsten Quadrate, bestimmt werden.

Bei einer Normalbremsung wird also der Druckaufbau in bestimmten (unterschiedlichen) Gruppen Gₘ von Radbremsen durchgeführt. Aus der Volumenaufnahme V_{DQm} mehrerer (unterschiedlicher) Radbrems-Gruppen Gₘ bei verschiedenen Drücken der Druckbereitstellungseinrichtung wird die Volumenaufnahme der einzelnen Radbremsen Vᵢ berechnet.

Eine mögliche Wahl der Radbrems-Gruppen bei vier Radbremsen (n=4, wobei FL: vorne links, FR: vorne rechts, RR: hinten rechts und RL: hinten links bedeutet) besteht aus der Gruppe G₁, welche alle vier Radbremsen FL, FR, RR, RL umfasst, und den Gruppen G₂, G₃, G₄ und G₅, welche jeweils unterschiedliche drei Radbremsen umfassen. Für jede Radbrems-Gruppe (m) ergibt sich das von der Druckbereitstellungseinrichtung 4 zur Betätigung der Radbrems-Gruppe abgegebene Druckmittelvolumen V_{DQm} aus der Summe der von den zu der Gruppe (m) gehörenden Radbremsen aufgenommenen Radvolumina Vᵢ. Entsprechend ergibt sich das folgende Gleichungssystem:

| Gruppe | | | | | | | | | | |
|---|---|---|---|---|---|---|---|---|---|---|
| G₁ | (1) | V_{DQ1} | = | V_{FL} | + | V_{FR} | + | V_{RL} | + | V_{RR} |
| G₂ | (2) | V_{DQ2} | = | V_{FL} | + | V_{FR} | + | V_{RL} | | |
| G₃ | (3) | V_{DQ3} | = | V_{FL} | + | V_{FR} | | | + | V_{RR} |
| G₄ | (4) | V_{DQ4} | = | V_{FL} | | | + | V_{RL} | + | V_{RR} |
| G₅ | (5) | V_{DQ5} | = | | | V_{RL} | + | V_{RL} | + | V_{RR} |

Aus den gemessenen Volumina V_{DQ1}, V_{DQ2}, V_{DQ3}, V_{DQ4} und V_{DQ5} werden dann die Radvolumina V_{FL}, V_{FR}, V_{RL}, V_{RR} anhand des Gleichungssystems bestimmt. Dies ist ein System mit vier Unbekannten (V_{FL}, V_{FR}, V_{RL}, V_{RR}) und fünf Gleichungen, von denen auf jeweils eine Gleichung verzichtet werden kann.

Da ein Fahrzeug, an dem ein Vorderrad und beide Hinterräder gebremst werden, zu Instabilität neigt, ist es besonders vorteilhaft, auf die oben genannten Radbrems-Gruppen G₄ und G₅, bei denen jeweils nur ein Vorderrad ungebremst ist, zu verzichten. Stattdessen wird z.B. in nur einer Diagonalen Druck aufgebaut, d.h. es werden alternativ die Radbrems-Gruppen G_{4'} und G_{5'} verwendet, welche zwei sich diagonal gegenüberliegende Radbremsen FL, RR bzw. FR, RL umfassen. Dadurch entsteht das folgende Gleichungssystem:

| Gruppe | | | | | | | | | | |
|---|---|---|---|---|---|---|---|---|---|---|
| G₁ | (1) | V_{DQ1} | = | V_{FL} | + | V_{FR} | + | V_{RL} | + | V_{RR} |
| G₂ | (2) | V_{DQ2} | = | V_{FL} | + | V_{FR} | + | V_{RL} | | |
| G₃ | (3) | V_{DQ3} | = | V_{FL} | + | V_{FR} | | | + | V_{RR} |
| G₄, | (4) | V_{DQ4} | = | V_{FL} | | | | | + | V_{RR} |
| G_{5'} | (5) | V_{DQ5} | = | | | V_{FR} | + | V_{RL} | | |

Auch hier kann auf eine der Gleichungen (1), (4) oder (5) zur Auswertung / Bestimmung der Radvolumina V_{FL}, V_{FR}, V_{RL}, V_{RR} verzichtet werden.

Die entstehenden linearen Gleichungssysteme werden bevorzugt gelöst, indem in einer Software der Steuer- und Regeleinheit die Inversen der oben ablesbaren Systemmatrizen hinterlegt werden.

Alternativ kann das überbestimmte Gleichungssystem näherungsweise nach der Methode der kleinsten Fehlerquadrate gelöst werden.

Anstelle einer Radbrems-Gruppe G_{4'} oder G_{5'}, welche zwei sich diagonal gegenüberliegende Radbremsen FL, RR bzw. FR, RL umfasst, kann eine Radbrems-Gruppe auch nur die beiden vorderen Radbremsen umfassen.

Das Verfahren zur Bestimmung der Druck-Volumen-Kennlinien der Radbremse, insbesondere der Druckaufbau in einer Untergruppe von Radbremsen (d.h. bei weniger als allen Radbremsen) wird beispielsgemäß nur bei Normalbremsungen durchgeführt. Vorteilhafterweise wird das Verfahren durchgeführt, wenn bei kleinen Fahrzeuggeschwindigkeiten gebremst wird. Bei Eintritt einer fahrdynamischen Regelfunktion (z.B. einer radindividuellen Bremsdruckregelung) wird der Vorgang abgebrochen.

Beispielsgemäß wird ein Verfahren vorgeschlagen, mittels welchem die Volumenaufnahme in Abhängigkeit vom Druck für jede einzelne Radbremse während des Betriebs des Fahrzeugs ermittelt werden kann. Da der Druckaufbau in nur einem Rad im Normalbetrieb nicht vorkommt und aus Stabilitätsgründen des Kraftfahrzeugs auch nicht willkürlich durchgeführt werden sollte, werden dazu bevorzugt während einer oder mehrerer Betriebsbremsungen des Kraftfahrzeugs verschiedene Gruppen von jeweils mindestens zwei Radbremsen von der Druckbereitstellungseinrichtung betätigt.

## Patentansprüche

1. Verfahren zur Bestimmung einer Druck-Volumen-Kennlinie (Vᵢ(p)) einer Radbremse (6a-6d) in einer Bremsanlage für Kraftfahrzeuge mit
• einer elektrisch steuerbaren Druckbereitstellungseinrichtung (4), welche mit Radbremsen (6a-6d) hydraulisch verbunden oder verbindbar ist und ein Druckmittelvolumen (V_{DQ}) zur Betätigung der Radbremsen (6a-6d) abgeben kann, wobei das von der Druckbereitstellungseinrichtung (4) abgegebene Druckmittelvolumen bestimmbar ist, und
• einem elektrisch ansteuerbaren Einlassventil (28a-28d) je Radbremse zur Trennung der Verbindung zwischen der Radbremse und der Druckbereitstellungseinrichtung (4),
**dadurch gekennzeichnet, dass** während einer oder mehrerer Betriebsbremsungen des Kraftfahrzeugs Radbremsen von der Druckbereitstellungseinrichtung (4) betätigt werden, das von der Druckbereitstellungseinrichtung (4) zur Betätigung der Radbremsen abgegebene Druckmittelvolumen (V_{DQm}) bestimmt wird und die Druck-Volumen-Kennlinien (Vᵢ(p)) der Radbremsen (6a-6d) anhand von während einer oder mehrerer Betriebsbremsungen von der Druckbereitstellungseinrichtung (4) abgegebenen Druckmittelvolumina (V_{DQ1}, V_{DQ2}, V_{DQ3}, V_{DQ4}, V_{DQ5}) ermittelt werden.

2. Verfahren nach Anspruch 1, **dadurch gekennzeichnet, dass** während einer oder mehrerer Betriebsbremsungen verschiedene, insbesondere vorgegebene, Gruppen (Gₘ) von zwei oder mehr Radbremsen von der Druckbereitstellungseinrichtung (4) betätigt werden und dass die Druck-Volumen-Kennlinien (Vᵢ(p)) der einzelnen Radbremsen (6a-6d) anhand der von der Druckbereitstellungseinrichtung (4) zur Betätigung der verschiedenen Gruppen von Radbremsen, insbesondere bei verschiedenen Drücken, abgegebenen Druckmittelvolumina (V_{DQ1}, V_{DQ2}, V_{DQ3}, V_{DQ4}, V_{DQ5}) ermittelt werden.

3. Verfahren nach Anspruch 1 oder 2, **dadurch gekennzeichnet, dass** zur Ermittlung eines von der Druckbereitstellungseinrichtung (4) abgegebenen Druckmittelvolumens (V_{DQm}) die Druckbereitstellungseinrichtung mit einer Gruppe (Gₘ) von zwei oder mehr Radbremsen verbunden ist, während die Druckbereitstellungseinrichtung von der oder den übrigen Radbremse(n) getrennt ist/sind, und ein Druckaufbau in der Gruppe (Gₘ) von Radbremsen mittels der Druckbereitstellungseinrichtung (4) durchgeführt wird.

4. Verfahren nach Anspruch 2 oder 3, **dadurch gekennzeichnet, dass** die Gruppen (Gₘ) von Radbremsen zeitlich nacheinander von der Druckbereitstellungseinrichtung (4) betätigt werden.

5. Verfahren nach einem der Ansprüche 2 bis 4, **dadurch gekennzeichnet, dass** die Gruppen (Gₘ) von Radbremsen bei einer oder mehreren Betriebsbremsungen mit verschiedenen Drücken (pⱼ) von der Druckbereitstellungseinrichtung (4) betätigt werden, wobei der jeweilige Druck der Druckbereitstellungseinrichtung gemessen wird.

6. Verfahren nach einem der Ansprüche 2 bis 5, **dadurch gekennzeichnet, dass** eine Gruppe von zwei Radbremsen (G_{4'}, G_{5'}) sich diagonal gegenüberliegende Radbremsen (FL, RR; FR, RL) umfasst.

7. Verfahren nach einem der Ansprüche 2 bis 5, **dadurch gekennzeichnet, dass** eine Gruppe von zwei Radbremsen die beiden Radbremsen der Vorderachse (FR, FL) umfasst.

8. Verfahren nach einem der Ansprüche 2 bis 7, **dadurch gekennzeichnet, dass** keine der Gruppen von Radbremsen zumindest zwei Hinterachs-Radbremsen (RR, RL) und nur eine einzige Vorderachs-Radbremse umfasst.

9. Verfahren nach einem der Ansprüche 2 bis 8, **dadurch gekennzeichnet, dass** der mittels der Druckbereitstellungseinrichtung (4) in der jeweiligen Gruppe (Gₘ) von betätigten Radbremsen aufgebaute Druck (pⱼ) derart eingestellt wird, dass die von einem Fahrzeugführer oder einer Bremsfunktion, insbesondere einer Abstandsregelfunktion, angeforderte Bremsverzögerung (a_{Brems}) erzielt wird.

10. Verfahren nach einem der Ansprüche 1 bis 9, **dadurch gekennzeichnet, dass** dieses, insbesondere ausschließlich, während Betriebsbremsungen bei Fahrzeuggeschwindigkeiten, welche geringer als ein vorgegebener Schwellenwert sind, durchgeführt wird.

11. Verfahren nach einem der Ansprüche 1 bis 10, **dadurch gekennzeichnet, dass** die Betätigung der, insbesondere Gruppen (Gₘ) von, Radbremsen durch die Druckbereitstellungseinrichtung (4) zur Ermittlung der Druck-Volumen-Kennlinien (Vᵢ(p)) der Radbremsen (6a-6d) abgebrochen wird, sobald eine Bremsdruckregelfunktion, insbesondere eine Antiblockierregelung oder eine Fahrdynamikregelung, angefordert oder notwendig wird.

12. Verfahren nach einem der Ansprüche 1 bis 11, **dadurch gekennzeichnet, dass** die Anzahl (mₘₐₓ) von verschiedenen Gruppen (Gₘ) von Radbremsen gleich oder größer als die Anzahl (n) der Radbremsen gewählt wird.

13. Verfahren nach einem der Ansprüche 1 bis 12, **dadurch gekennzeichnet, dass**, insbesondere für einen vorgegebenen oder vorbestimmten Druck (pⱼ), aus den bestimmten Druckmittelvolumina (V_{DQ1}, V_{DQ2}, V_{DQ3}, V_{DQ4}, V_{DQ5}) anhand eines linearen Gleichungssystems die Volumenaufnahme (Vᵢ) für jede Radbremse (6a-6d) ermittelt wird.

14. Bremsanlage für Kraftfahrzeuge mit
• einer elektrisch steuerbaren Druckbereitstellungseinrichtung (4), welche mit Radbremsen (6a-6d) hydraulisch verbunden oder verbindbar ist und ein Druckmittelvolumen (V_{DQ}) zur Betätigung der Radbremsen abgeben kann, wobei das von der Druckbereitstellungseinrichtung (4) abgegebene Druckmittelvolumen bestimmbar ist,
• insbesondere einem mittels eines Bremspedals (1) betätigbaren Hauptbremszylinder (12), welcher mit den Radbremsen trennbar (14a, 14b) verbunden ist,
• einem elektrisch ansteuerbaren Einlassventil (28a-28d) je Radbremse zur Trennung der Verbindung zwischen der Radbremse (6a-6d) und der Druckbereitstellungseinrichtung (4), und
• einer elektronischen Steuer- und Regeleinheit (7) zur Ansteuerung der elektrisch steuerbaren Druckbereitstellungseinrichtung (4) sowie der Einlassventile (28a-28d),
**dadurch gekennzeichnet, dass** in der elektronischen Steuer- und Regeleinheit (7) ein Verfahren gemäß einem der Ansprüche 1 bis 13 durchgeführt wird.

## Claims

1. Method for determining a pressure/volume characteristic curve (Vᵢ(p)) of a wheel brake (6a-6d) in a brake system for motor vehicles having
• an electrically controllable pressure supply device (4) which is or can be connected hydraulically to wheel brakes (6a-6d) and can output a pressure medium volume (V_{DQ}) for activating the wheel brakes (6a-6d), wherein the pressure medium volume which is output by the pressure supply device (4) can be determined, and
• an electrically actuable inlet valve (28a-28d) per wheel brake for disconnecting the connection between the wheel brake and the pressure supply device (4),
**characterized in that** during one or more service braking operations of the motor vehicle wheel brakes are activated by the pressure supply device (4), the pressure medium volume (V_{DQm}) which is output by the pressure supply device (4) in order to activate the wheel brakes is determined, and the pressure/volume characteristic curves (Vᵢ(p)) of the wheel brakes (6a-6d) are determined on the basis of pressure medium volumes (V_{DQ1}, V_{DQ2}, V_{DQ3}, V_{DQ4}, V_{DQ5}) which are output by the pressure supply device (4) during one or more service braking operations.

2. Method according to Claim 1, **characterized in that** during one or more service braking operations various, in particular predefined, groups (Gₘ) of two or more wheel brakes are activated by the pressure supply device (4), and **in that** the pressure/volume characteristic curves (Vᵢ(p)) of the individual wheel brakes (6a-6d) are determined on the basis of the pressure medium volumes (V_{DQ1}, V_{DQ2}, V_{DQ3}, V_{DQ4}, V_{DQ5}) which are output by the pressure supply device (4) in order to activate the various groups of wheel brakes, in particular at various pressures.

3. Method according to Claim 1 or 2, **characterized in that**, in order to obtain a pressure medium volume (V_{DQm}) which is output by the pressure supply device (4) the pressure supply device is connected to a group (Gₘ) of two or more wheel brakes, while the pressure supply device is disconnected from the other wheel brake/brakes, and a pressure buildup in the group (Gₘ) of wheel brakes is implemented by means of the pressure supply device (4) .

4. Method according to Claim 2 or 3, **characterized in that** the groups (Gₘ) of wheel brakes are activated in chronological succession by the pressure supply device (4).

5. Method according to one of Claims 2 to 4, **characterized in that** during one or more service braking operations the groups (Gₘ) of wheel brakes are activated with different pressures (pⱼ) by the pressure supply device (4), wherein the respective pressure of the pressure supply device is measured.

6. Method according to one of Claims 2 to 5, **characterized in that** a group of two wheel brakes (G_{4'}, G_{5'}) comprises wheel brakes (FL, RR; FR, RL) which are diagonally opposite one another.

7. Method according to one of Claims 2 to 5, **characterized in that** a group of two wheel brakes comprises the two wheel brakes of the front axle (FR, FL).

8. Method according to one of Claims 2 to 7, **characterized in that** none of the groups of wheel brakes comprises at least two rear-axle wheel brakes (RR, RL) and just a single front-axle wheel brake.

9. Method according to one of Claims 2 to 8, **characterized in that** the pressure (pⱼ) which is built up in the respective group (Gₘ) of activated wheel brakes by means of the pressure supply device (4) is set in such a way that the braking deceleration (a_{Brake}) requested by a vehicle driver or a braking function, in particular an adaptive cruise control function, is achieved.

10. Method according to one of Claims 1 to 9, **characterized in that** said method is carried out, in particular, exclusively during braking operations at vehicle speeds which are lower than a predefined threshold value.

11. Method according to one of Claims 1 to 10, **characterized in that** the activation of the wheel brakes, in particular groups (Gₘ) of wheel brakes, by the pressure supply device (4) for obtaining the pressure/volume characteristic curves (Vᵢ(p)) of the wheel brakes (6a-6d) is interrupted as soon as a brake pressure control function, in particular an anti-lock brake control process or a vehicle movement dynamics control process, is requested or becomes necessary.

12. Method according to one of Claims 1 to 11, **characterized in that** the number (mₘₐₓ) of different groups (Gₘ) of wheel brakes is selected to be equal to or larger than the number (n) of wheel brakes.

13. Method according to one of Claims 1 to 12, **characterized in that** the capacity (Vᵢ) for each wheel brake (6a-6d) is obtained, in particular, for a predefined or predetermined pressure (pⱼ), from the determined pressure medium volumes (V_{DQ1}, V_{DQ2}, V_{DQ3}, V_{DQ4}, V_{DQ5}) on the basis of a linear equation system.

14. Brake system for motor vehicles having
• an electrically controllable pressure supply device (4) which is or can be connected hydraulically to wheel brakes (6a-6d) and can output a pressure medium volume (V_{DQ}) for activating the wheel brakes, wherein the pressure medium volume which is output by the pressure supply device (4) can be determined, and
• in particular a master brake cylinder (12) which can be activated by means of a brake pedal (1) and is connected to the wheel brakes in a disconnectable fashion (14a, 14b),
• an electrically actuable inlet valve (28a-28d) per wheel brake for disconnecting the connection between the wheel brake (6a-6d) and the pressure supply device (4), and
• an electronic open-loop and closed-loop control unit (7) for actuating the electrically controllable pressure supply device (4) and the inlet valves (28a-28d),
**characterized in that** a method according to one of Claims 1 to 13 is carried out in the electronic open-loop and closed-loop control unit (7).

## Revendications

1. Procédé de détermination d'une courbe caractéristique pression-volume (Vᵢ(p)) d'un frein de roue (6a-6d) dans une installation de freinage pour des véhicules automobiles, avec
• un dispositif de fourniture de pression (4) à commande électrique, qui est ou peut être raccordé hydrauliquement à des freins de roue (6a-6d) et qui peut délivrer un volume de fluide sous pression (V_{DQ}) pour l'actionnement des freins de roue (6a-6d), dans lequel le volume de fluide sous pression délivré par le dispositif de fourniture de pression (4) peut être déterminé, et
• une vanne d'entrée à commande électrique (28a-28d) par frein de roue pour la séparation du raccordement entre le frein de roue et le dispositif de fourniture de pression (4)
**caractérisé en ce que** pendant un ou plusieurs freinage(s) de service du véhicule automobile on actionne des freins de roue au moyen du dispositif de fourniture de pression (4), on détermine le volume de fluide sous pression (V_{DQm}) délivré par le dispositif de fourniture de pression (4) pour l'actionnement des freins de roue et on détermine les courbes caractéristiques pression-volume (Vᵢ(p)) des freins de roue (6a-6d) à l'aide de volumes de fluide sous pression (V_{DQ1}, V_{DQ2}, V_{DQ3}, V_{DQ4}, V_{DQ5}) délivrés par le dispositif de fourniture de pression (4) pendant un ou plusieurs freinage(s) de service.

2. Procédé selon la revendication 1, **caractérisé en ce que** pendant un ou plusieurs freinage(s) de service, on actionne des groupes différents (Gₘ), en particulier prédéterminés, de deux freins de roue ou plus au moyen du dispositif de fourniture de pression (4) et **en ce que** l'on détermine les courbes caractéristiques pression-volume (Vᵢ(p)) des freins de roue individuels (6a-6d) à l'aide des volumes de fluide sous pression (V_{DQ1}, V_{DQ2}, V_{DQ3}, V_{DQ4}, V_{DQ5}) délivrés par le dispositif de fourniture de pression (4) pour l'actionnement des différents groupes de freins de roue, en particulier à des pressions différentes.

3. Procédé selon la revendication 1 ou 2 **caractérisé en ce que** pour déterminer un volume de fluide sous pression (V_{DQm}) délivré par le dispositif de fourniture de pression (4), le dispositif de fourniture de pression est raccordé à un groupe (Gₘ) de deux freins de roue ou plus, tandis que le dispositif de fourniture de pression est séparé du ou des autres frein(s) de roue, et on opère une augmentation de la pression dans le groupe (Gₘ) de freins de roue au moyen du dispositif de fourniture de pression (4).

4. Procédé selon la revendication 2 ou 3, **caractérisé en ce que** l'on actionne les groupes (Gₘ) de freins de roue temporellement l'un après l'autre au moyen du dispositif de fourniture de pression (4).

5. Procédé selon l'une quelconque des revendications 2 à 4, **caractérisé en ce que** l'on actionne les groupes (Gₘ) de freins de roue lors d'un ou de plusieurs freinage(s) de service avec différentes pressions (pⱼ) au moyen du dispositif de fourniture de pression (4), dans lequel on mesure la pression respective du dispositif de fourniture de pression.

6. Procédé selon l'une quelconque des revendications 2 à 5, **caractérisé en ce qu'**un groupe de deux freins de roue (G_{4'}, G_{5'}) comprend des freins de roue diamétralement opposés (FL, RR; FR, RL).

7. Procédé selon l'une quelconque des revendications 2 à 5, **caractérisé en ce qu'**un groupe de deux freins de roue comprend les deux freins de roue de l'essieu avant (FR, FL).

8. Procédé selon l'une quelconque des revendications 2 à 7, **caractérisé en ce qu'**aucun des groupes de freins de roue ne comprend au moins deux freins de roue de l'essieu arrière (RR, RL) et seulement un seul frein de roue de l'essieu avant.

9. Procédé selon l'une quelconque des revendications 2 à 8, **caractérisé en ce que** l'on règle la pression (pⱼ) créée au moyen du dispositif de fourniture de pression (4) dans le groupe respectif (Gₘ) de freins de roue actionnés de telle manière que le ralentissement de freinage (a_{frein}) demandé par un conducteur du véhicule ou par une fonction de freinage, en particulier une fonction de réglage de distance, soit atteint.

10. Procédé selon l'une quelconque des revendications 1 à 9, **caractérisé en ce que** l'on exécute ce procédé, en particulier exclusivement, pendant des freinages de service à des vitesses du véhicule, qui sont inférieures à une valeur de seuil prédéterminée.

11. Procédé selon l'une quelconque des revendications 1 à 10, **caractérisé en ce que** l'on interrompt l'actionnement des, en particulier du groupe (Gm) de, freins de roue par le dispositif de fourniture de pression (4) pour la détermination des courbes caractéristiques pression-volume (Vᵢ(p)) des freins de roue (6a-6d), dès qu'une fonction de réglage de la pression de freinage, en particulier un réglage d'antiblocage ou un réglage de la dynamique de conduite, est demandée ou devient nécessaire.

12. Procédé selon l'une quelconque des revendications 1 à 11, **caractérisé en ce que** l'on choisit le nombre (nₘₐₓ) de groupes différents (Gₘ) de freins de roue égal ou supérieur au nombre (n) des freins de roue.

13. Procédé selon l'une quelconque des revendications 1 à 12, **caractérisé en ce que**, en particulier pour une pression prédéfinie ou prédéterminée (pⱼ), on détermine la capacité (Vᵢ) pour chaque frein de roue (6a-6d) à partir des volumes de fluide sous pression déterminés (V_{DQ1}, V_{DQ2}, V_{DQ3}, V_{DQ4}, V_{DQ5}) au moyen d'un système d'équations linéaire.

14. Installation de freinage pour des véhicules automobiles, avec
• un dispositif de fourniture de pression (4) à commande électrique, qui est ou peut être raccordé hydrauliquement à des freins de roue (6a-6d) et qui peut délivrer un volume de fluide sous pression (V_{DQ}) pour l'actionnement des freins de roue, dans laquelle le volume de fluide sous pression délivré par le dispositif de fourniture de pression (4) peut être déterminé,
• en particulier un maître-cylindre de frein (12) pouvant être actionné au moyen d'une pédale de frein (1), qui est raccordé de façon séparable (14a, 14b) aux freins de roue,
• une vanne d'entrée à commande électrique (28a-28d) par frein de roue pour la séparation du raccordement entre le frein de roue (6a-6d) et le dispositif de fourniture de pression (4), et
• une unité électronique de commande et de régulation (7) pour la commande du dispositif de fourniture de pression (4) à commande électrique ainsi que des vannes d'entrée (28a-28d),
**caractérisée en ce qu'**un procédé selon l'une quelconque des revendications 1 à 13 est exécuté dans l'unité électronique de commande et de régulation (7).
